# EUROPÄISCHE PATENTSCHRIFT

(11) **EP 2 641 925 B1**
(45) Veröffentlichungstag und Bekanntmachung des Hinweises auf die Patenterteilung: **01.02.2017**
(21) Anmeldenummer: 13158701.6
(22) Anmeldetag: 12.03.2013
(51) Int. Cl.: C08G 18/71, C08G 18/32, C09D 175/04, C09D 133/00, C09D 183/04, C09D 167/00, C09D 7/12, C08K 5/544

(54) **Addukte aus Isocyanatoalkyl-trialkoxysilanen und aliphatischen, alkyl-verzweigten Diolen oder Polyolen**
Adducts from isocyanatoalkyl trialkoxysilanes and aliphatic, alkyl-branched diols or polyols
Additifs à base d'isocyanatoalkyl-trialcoxysilanes et de dioles ou de polyols aliphatiques alkyle-ramifiés

(30) Priorität: 19.03.2012 DE 102012204290
(43) Veröffentlichungstag der Anmeldung: 25.09.2013
(73) Patentinhaber: Evonik Degussa GmbH, 45128 Essen (DE)
(72) Erfinder: Lomoelder, Rainer, Dr., 48153 Münster (DE); Raukamp, Andre, 45772 Marl (DE); Naumann, Sabine, 44651 Herne (DE); Nacke, Christoph, 46514 Schermbeck (DE); Herda, Silvia, 44623 Herne (DE)

(56) Entgegenhaltungen:
- EP-A1- 1 780 231
- EP-A1- 1 802 716
- WO-A1-2008/131715

## Beschreibung

Die vorliegende Erfindung betrifft aus niedermolekularen Addukten aus Isocyanatoalkyl-trialkoxysilanen und aliphatischen alkyl-verzweigten Diolen oder Polyolen, die vorzugweise bei Temperaturen oberhalb von 0 °C flüssig sind hergestellte Beschichtungsmittel, insbesondere kratzbeständige Klarlacke.

An moderne Beschichtungen aller Art, insbesondere von Lackierungen im Automobilbereich, werden hohe Anforderungen an die Kratzbeständigkeiten gestellt. Zahlreiche Ansätze wurden in der Vergangenheit unternommen, die hohe Kratzbeständigkeit von Decklacken über Kombinationen aus PUR-Vernetzung und Silan-Vernetzung zu erzielen (WO 2008/074489A1, WO 2008/110229A3, WO 2006/042658A, WO 2008/110230A, EP1273640A, DE 102004050747). Auch isocyanatfreie Systeme sind auf diesem Gebiet beschrieben (EP 1802716B1, WO 2008/131715A1, WO 2008/034409). In der Regel ist die Kratzbeständigkeit abhängig von der Vernetzungsdichte, das heißt von dem Gehalt an Silanmonomeren bzw.-Si(OR)₃-Gruppen. Nachteilig bei diesen Technologien sind verhältnismäßig geringe Festkörpergehalte der Lackformulierungen, was auf die relativ hohen Molekulargewichte der Silan-funktionellen Vernetzer zurückzuführen ist.

Zur Erzielung möglichst hoher Gehalte an -Si(OR)₃-Gruppen eignen sich niedermolekulare Addukte aus Diolen und Isocyanatopropyltrialkoxysilanen. Derartige Addukte sind z. B. in WO 2008/034409 oder WO 2008/131715 beschrieben. Problematisch bei den bekannten Systemen ist die häufig unzureichende Flexibilität der resultierenden Beschichtungen. Ein weiteres Problem ist die hohe Kristallisationsneigung und geringe Verträglichkeit von Addukten aus Isocyanatopropyltrialkoxysilanen und niedermolekularen Diolen, so dass bei den vielfach erwünschten Härtungstemperaturen unterhalb von 100 °C mit Verlaufsproblemen und Oberflächenstörungen des resultierenden Lackfilms durch kristallisationsbedingte Unverträglichkeiten der Lackkomponenten zu rechnen ist. In dem oben genannten Stand der Technik erfolgt daher in der Regel eine Wärmehärtung der Klarlacke, z. B. für den Automobilbereich, bei Temperaturen oberhalb von 100 °C.

EP 1 780 231 A1 offenbart Pulverbeschichtungen und Klebstoffformmulierungen, die Addukte aus Isocyanatoalkoxysilanen und linearen oder verzweigten Di- oder Polyolen einsetzen.

Aufgabe der vorliegenden Erfindung ist die Bereitstellung verbesserter Ausgangsstoffe, die zur Herstellung von kratzbeständigen Beschichtungen, insbesondere von hoch glänzenden, kratzbeständigen Klarlacken, geeignet sind. Weiterhin soll eine ausreichende Flexibilität der erhaltenen Beschichtungen gewährleistet werden, wobei das genannte Eigenschaftsprofil über einen breiten Temperaturbereich bei Applikation und Härtung der flüssigen Lacke, insbesondere bei Temperaturen im Bereich unterhalb 100 °C, erhalten bleiben soll.

Gelöst wird die Aufgabe durch Beschichtungsmittel enthaltend niedermolekulare Addukte aus Isocyanatoalkyl-trialkoxysilanen und aliphatischen verzweigten Diolen oder Polyolen, die vorzugsweise bei Temperaturen oberhalb von 0 °C flüssig sind. Die Addukte führen in Beschichtungsmitteln, insbesondere in Klarlacken, die über einen weiten Temperaturbereich ausgehärtet werden können, zu überraschend kratzbeständigen Beschichtungen mit hervorragendem Verlauf und Glanz.

Gegenstand der vorliegenden Erfindung sind Beschichtungsmittel enthaltend Addukte aus der Umsetzung von Verbindungen der Formel (I)

OCN-(Alkyl)-Si(Alkoxy)₃ (I)

mit Verbindungen der Formel (II)

HO-(R)-OH (II)

worin Alkyl lineare oder verzweigte Alkylenketten mit 1-4 Kohlenstoffatomen, Alkoxy gleichzeitig oder unabhängig voneinander Methoxy-, Ethoxy-, Propoxy- oder Butoxy-Gruppen und R ein verzweigter Alkylen- oder Cycloalkylenrest mit nicht mehr als 20, insbesondere 2 bis 20, Kohlenstoffatomen bedeutet, wobei R Hydroxy-substituiert sein kann. Insbesondere bevorzugt sind die Addukte bei Temperaturen von mehr als 0 °C flüssig.

Die Umsetzung der Komponenten (I) und (II) zur Bildung der Addukte erfolgt dabei insbesondere derart, dass das Verhältnis von OH-Gruppen aus Verbindung (II) zu NCO-Gruppen aus Verbindung (I) von 0,8:1 bis 1,2:1, bevorzugt 0,9:1 bis 1,1:1, beträgt, wobei die stöchiometrische Umsetzung ganz besonders bevorzugt ist. Somit erfolgt insbesondere bevorzugt eine vollständige Umsetzung aller OH-Gruppen der Verbindungen der Formel (II) mit NCO-Gruppen der Verbindungen der Formel I.

Bei der genannten Umsetzung reagieren die NCO-Gruppen der Verbindungen der Formel (I) mit den OH-Gruppen der Verbindungen der Formel (II) unter Ausbildung von -NH-CO-O-Gruppen, die die Verbindungen der Formel (I) und (II) miteinander verknüpfen.

Als Verbindungen der Formel (I) OCN-(Alkyl)-Si(Alkoxy)₃ eignen sich grundsätzlich alle der vorab beschriebenen möglichen Verbindungen. Besonders bevorzugt ist Alkoxy ausgewählt aus Trimethoxy- und Triethoxygruppen.
Geeignete Verbindungen der Formel(I) sind beispielsweise Isocyanatoalkylalkoxysilane, die insbesondere ausgewählt sind aus der Gruppe umfassend 3-Isocyanatopropyltrimethoxysilan, 3-Isocyanatopropyltriethoxysilan, 3-Isocyanatopropyltriisopropoxysilan, 2-Isocyanatoethyltrimethoxysilan, 2-Isocyanatoethyltriethoxysilan, 2-Isocyanatoethyltriisopropoxysilan, 4-Isocyanatobutyltrimethoxysilan, 4-Isocyanatobutyltriethoxysilan, 4-Isocyanatobutyltriisopropoxysilane, Isocyanatomethyltrimethoxysilan, Isocyanatomethyltriethoxysilan und/oder Isocyanatomethytriisopropoxysilan.

Besonders bevorzugt werden 3-Isocyanatopropyltrialkoxysilane, insbesondere 3-Isocyanatopropyltrimethoxysilan und/oder Isocyanatopropyltriethoxysilan als Verbindungen der Formel (I) eingesetzt.

Als Verbindungen der Formel (II) HO-(R)-OH worin R ein verzweigter Alkylen- oder Cycloalkylenrest mit nicht mehr als 20, insbesondere 2 bis 20, Kohlenstoffatomen bedeutet, wobei R Hydroxy-substituiert sein kann, eignen sich insbesondere aliphatische verzweigte Diole oder Polyole. Vorzugsweise weisen die Verbindungen der Formel (II) ein Molekulargewicht von 76 bis 314 g/mol, besonders bevorzugt von 90 bis 206 g/mol auf.

Bevorzugt sind die Verbindungen der Formel (II) ausgewählt aus der Gruppe umfassend 2,2,4-Trimethylhexandiol-1,6 und 2,4,4-Trimethylhexandiol-1,6 allein oder als beliebige Gemische dieser Isomeren, 2,2-Dimethyl-butandiol-1,3, 2-Methyl-pentandiol-2,4, 3-Methyl-pentandiol-2,4, 2,2,4-Trimethyl-pentandiol-1,3, 2-Ethylhexandiol-1,3, 2,2-Dimethylhexandiol-1,3,3-Methylpentandiol-1,5, 2-Methyl-pentandiol-1,5, 2,2-Dimethylpropandiol-1,3 (Neopentylglykol), 1,1,1-Trimethylolpropan, 3(4),8(9)-Bis(hydroxymethyl)-tricyclo[5.2.1.02,6]decan (Dicidol) und/oder 2,2-Bis-(4-hydroxycyclohexyl)propan. Besonders bevorzugt werden 1,1,1-Trimethylolpropan, 3-Methylpentandiol-1,5, Neopentylglykol, 2,2,4-Trimethylhexandiol-1,6 und 2,4,4-Trimethylhexandiol-1,6, allein oder als beliebige Gemische dieser Isomeren eingesetzt.

Die genannten Verbindungen können dabei jeweils allein oder in Form ihrer Mischungen eingesetzt werden. Ganz besonders bevorzugt wird 2,2,4-Trimethylhexandiol-1,6 und 2,4,4-Trimethylhexandiol-1,6 allein oder als beliebige Gemische dieser Isomeren, eingesetzt.

Die Herstellung der Addukte erfolgt im Allgemeinen lösemittelfrei oder unter Verwendung von nicht-protischen Lösemitteln, wobei die Umsetzung diskontinuierlich oder kontinuierlich erfolgen kann. Die Reaktion kann bei Raumtemperatur, das heißt bei Temperaturen im Bereich von 20 - 25 °C, geführt werden, bevorzugt werden jedoch höhere Temperaturen im Bereich von 30 - 150 °C, insbesondere im Bereich von 50 - 150 °C verwendet. Zur Beschleunigung der Reaktion können vorteilhaft in der Urethanchemie bekannte Katalysatoren wie Sn-, Bi-, Zn- und andere Metallcarboxylate, tert.-Amine wie beispielsweise 1,4-Diazabicyclo[2.2.2]octan (DABCO), Triethylamin etc. eingesetzt werden. Die Reaktion wird bevorzugt unter Ausschluss von Wasser durchgeführt.

Die Addukte sind insbesondere bei Temperaturen oberhalb von 0 °C flüssig. Es handelt sich dabei um nicht kristallisierende, niedermolekulare Verbindungen. In Abhängigkeit der gewählten Stöchiometrie beider Reaktionspartner kann das Reaktionsprodukt noch freie Hydroxyl- oder Isocyanatgruppen enthalten. Aufgrund der bevorzugten Ausführungsform sind die Addukte im Wesentlichen frei von Hydroxyl- gruppen. Die Addukte sind in lösemittelfreier Form niedrig- bis mittelviskos und bei 0 °C flüssig. Zwecks besserer Handhabbarkeit können die Produkte jedoch mit Lösemitteln, die wie Alkohole auch protisch sein können, versetzt sein. Die Festkörpergehalte derartiger Zubereitungen betragen vorzugsweise > 80 Gew.-% und weisen dabei eine bevorzugt eine maximale Viskosität von 500 mPas (DIN EN/ISO 3219 23 °C) auf.

Die Addukte aus Isocyanatoalkyltrialkoxysilan und verzweigten Diolen oder Polyolen werden in vorteilhafter Weise als vernetzende Komponente für kratzbeständige Klarlacke verwendet. Dabei werden sie zur Optimierung der Lackmechanik mit polymeren Bindemitteln, die auch vernetzbare funktionelle Gruppen tragen können, abgemischt. Die Reaktivität der Silanaddukte ist für eine Aushärtungsgeschwindigkeit bei Umgebungstemperatur, wie sie z. B. von 2K-PUR-Lacken bekannt ist, nicht ausreichend. Zur Steigerung der Vernetzungsgeschwindigkeit werden daher vorzugsweise Katalysatoren zugesetzt.
Hierzu eignen sich Metall- oder Übergangsmetallchelate, -Salze oder -Partikel, beispielsweise auf Basis von Titan-, Aluminium-, Zinn- oder Zirkoniumkomplexen, Sulfonsäuren, Phosphorsäure oder phosphorigen Säuren und deren Derivaten, Carbonsäuren mit Schmelzpunkten oberhalb von 60 °C, quarternäre Ammoniumcarboxylate oder auch Kombinationen der genannten Verbindungen.
Die bei der erfindungsgemäßen Verwendung einzusetzenden Lacke können lösemittelfrei oder lösemittelhaltig sein, insbesondere bevorzugt sind die einzusetzenden Lacke nicht-wässrig. Nicht wässrig im Sinne der vorliegenden Erfindung meint einen Gehalt an Wasser im Lack von nicht mehr als 1,0 Gew.-%, vorzugsweise nicht mehr als 0,5 Gew.-%, bezogen auf den Lack. Insbesondere im Falle zweikomponentiger Formulierungen kann die vorab genannte geringe Menge Wasser zur Beschleunigung der Aushärtung eingesetzt werden. Insbesondere bevorzugt ist das eingesetzte Lacksystem frei von Wasser.

Die mittels der Addukte erhältlichen Lacke können insbesondere zur Beschichtung von Holz, Kunststoff, Glas oder Metall eingesetzt werden. Auf diese Weise werden hoch kratzfeste und bereits bei Temperaturen unterhalb von 100 °C vernetzende Lacke erhalten.

Somit ist ein weiterer Gegenstand der Erfindung die Verwendung von Addukten aus der Umsetzung von Verbindungen der Formel (I)

OCN-(Alkyl)-Si(Alkoxy)₃ (I)

mit Verbindungen der Formel (II)

HO-(R)-OH (II)

worin Alkyl lineare oder verzweigte Alkylenketten mit 1-4 Kohlenstoffatomen, Alkoxy gleichzeitig oder unabhängig voneinander Methoxy-, Ethoxy-, Propoxy- oder Butoxy-Gruppen, und R ein verzweigter Alkylen- oder Cycloalkylenrest mit nicht mehr als 20, insbesondere 2 bis 20, Kohlenstoffatomen bedeutet, wobei R Hydroxy-substituiert sein kann, als Beschichtungsmittel oder als Bestandteil von Beschichtungsmitteln, insbesondere zur Herstellung kratzbeständiger Klarlacke. Insbesondere bevorzugt sind die Addukte bei Temperaturen oberhalb von 0 °C flüssig.

Die auf Basis der vorab genannten Beschichtungsmittel erhaltenen Beschichtungen sind gekennzeichnet durch eine hohe Beständigkeit gegenüber mechanischer Beanspruchung, insbesondere weisen sie eine hohe Kratzbeständigkeit auf. Überraschend dabei ist, dass die erhaltenen Beschichtungen gleichzeitig eine hohe Flexibilität und einen hohen Glanz aufweisen.

Die Beschichtungsmittel, welche vorzugsweise bei Temperaturen von 20 bis 100 °C härtbar sind, enthalten
A) Addukte gemäß der vorliegenden Erfindung aus der Umsetzung von Verbindungen der Formel (I)

   OCN-(Alkyl)-Si(Alkoxy)₃ (I)

   mit Verbindungen der Formel (II)

   HO-(R)-OH (II)

   worin Alkyl lineare oder verzweigte Alkylenketten mit 1-4 Kohlenstoffatomen, Alkoxy: gleichzeitig oder unabhängig voneinander Methoxy-, Ethoxy-, Propoxy- oder Butoxy-Gruppen, und R ein verzweigter Alkylen- oder Cycloalkylenrest mit nicht mehr als 20, insbesondere 2 bis 20, Kohlenstoffatomen bedeutet, wobei R Hydroxy-substituiert sein kann,
B) eine oder mehrere Bindemittelkomponenten,
C) 0,1 bis 4 Gew.-% mindestens eines Katalysators,
D) optional Hilfs- und Zusatzstoffe,
E) optional organische Lösemittel.

Der Anteil der Addukte als Komponente A) in dem erfindungsgemäßen Beschichtungsmittel beträgt insbesondere 30-90 Gew.-%, vorzugsweise 20 bis 80 Gew.-%, bezogen auf das Beschichtungsmittel.

Weiterhin kann das erfindungsgemäße Beschichtungsmittel optional eine oder mehrere Bindemittel-Komponenten enthalten. Grundsätzlich eignen sich als Bindemittel-Komponenten alle dem Fachmann bekannten Arten von Bindemitteln, beispielsweise auch thermoplastische, das heißt nicht vernetzbare Bindemittel, die üblicherweise ein mittleres Molekulargewicht > 10000 g/mol aufweisen. Bevorzugt werden jedoch Bindemittel, die über reaktive funktionelle Gruppen mit aciden Wasserstoffatomen verfügen, eingesetzt. Geeignete Bindemittel der genannten Art weisen beispielsweise mindestens eine, bevorzugt jedoch zwei oder mehr Hydroxyl-gruppen auf. Weitere geeignete funktionelle Gruppen des Bindemittels sind beispielsweise Trialkoxysilan-Funktionalitäten.

Als Bindemittel mit funktionellen Gruppen werden bevorzugt Hydroxylgruppen-haltige Polymere, insbesondere Hydroxylgruppen-haltige Polyester, Polyether, Polyacrylate, Polycarbonate und Polyurethane mit einer OH-Zahl von 20 bis 500 mg KOH/g und einer mittleren Molmasse von 250 bis 6000 g/Mol eingesetzt. Besonders bevorzugt werden im Rahmen der vorliegenden Erfindung Hydroxylgruppen-haltige Polyester oder Polyacrylate mit einer OH-Zahl von 20 bis 150 mg KOH/g und einem mittleren Molekulargewicht von 500 bis 6000 g/mol als Bindemittelkomponenten eingesetzt.
Die Hydroxylzahl (OHZ) wird bestimmt nach DIN 53240-2.
Bei diesem Verfahren wird die Probe mit Essigsäureanhydrid in Gegenwart von 4-Dimethylaminopyridin als Katalysator umgesetzt, wobei die Hydroxylgruppen acetyliert werden. Dabei entsteht pro Hydroxylgruppe ein Molekül Essigsäure, während die anschließende Hydrolyse des überschüssigen Essigsäureanhydrids zwei Moleküle Essigsäure liefert. Der Verbrauch an Essigsäure wird titrimetrisch aus der Differenz zwischen Hauptwert und einem parallel durchzuführenden Blindwert ermittelt. Das Molekulargewicht wird bestimmt mittels Gelpermeationschromatographie (GPC). Die Charakterisierung der Proben erfolgte in Tetrahydrofuran als Eluent nach DIN 55672-1.

Als hydroxylgruppenhaltige (Meth)acryl-Copolymerisate können Harze mit einer Monomerzusammensetzung, wie sie z. B. in WO 93/15849 (S. 8, Zeile 25 bis S. 10, Zeile 5), oder auch in DE 195 29124 beschrieben sind, verwendet werden. Dabei sollte die durch anteilige Verwendung von (Meth)acrylsäure als Monomer einzustellende Säurezahl des (Meth)acryl-Copolymerisates 0 - 30, vorzugsweise 3 - 15 mg KOH/g betragen. Das zahlenmittlere Molgewicht (ermittelt durch Gelpermeationschromatographie gegen einen Polystyrolstandard) des (Meth)acryl-Copolymerisates beträgt vorzugsweise 2000 - 20000 g/mol, die Glasübergangstemperatur beträgt vorzugsweise -40 °C bis +60 °C. Der durch anteilige Verwendung von Hydroxyalkyl(meth)acrylaten einzustellende Hydroxylgehalt der erfindungsgemäß zu verwendenden (Meth)acryl-Copolymerisate beträgt vorzugsweise 70 - 250 mg KOH/g, besonders bevorzugt 90 - 190 mg KOH/g.

Erfindungsgemäß geeignete Polyesterpolyole sind Harze mit einer Monomerzusammensetzung aus Di- und Polycarbonsäuren und Di- und Polyolen, wie sie z. B. in Stoye/Freitag, Lackharze, C. Hanser Verlag, 1996, S. 49 oder auch in WO 93/15849 beschrieben sind. Als Polyesterpolyole können auch Polyadditionsprodukte von Caprolacton an niedermolekulare Di-und Triole, wie sie z. B. unter der Bezeichnung CAPA (Perstorp) erhältlich sind, eingesetzt werden. Das rechnerisch bestimmte zahlenmittlere Molgewicht beträgt vorzugsweise 500 - 5000 g/mol, besonders bevorzugt 800 - 3000 g/mol, die mittlere Funktionalität beträgt vorzugsweise 2,0 - 4,0, bevorzugt 2,0 - 3,5.

Als erfindungsgemäß zu verwendende urethan- und estergruppenhaltige Polyole kommen prinzipiell auch solche zum Einsatz, wie sie in EP 140 186 beschrieben sind. Bevorzugt werden urethan- und estergruppenhaltige Polyole, zu deren Herstellung HDI, IPDI, Trimethylhexamethylendiisocyanat (TMDI) oder (H₁₂-MDI) verwendet werden, eingesetzt. Das zahlenmittlere Molgewicht beträgt vorzugsweise 500 - 2000 g/mol, die mittlere Funktionalität liegt insbesondere im Bereich von 2,0 - 3,5.

Auch Trialkoxysilan-funktionelle Bindemittel eignen sich zur Verwendung als Komponente B. Derartige Harze können gewonnen werden durch Copolymerisation von Acrylat- oder Methacrylat-Monomeren mit acryl- oder methacryl-funktionellen Alkyl-Trialkoxysilan-Derivaten (z. B. Dynasylan^{®} MEMO der Evonik Industries AG), wie sie zum Beispiel in WO 92/11328 beschrieben sind. Ein alternativer Syntheseweg besteht in der Derivatisierung von hydroxylgruppenhaltigen Polyethern, Polyestern, Polycarbonat-diolen oder Polyacrylaten mit Isocyanatopropyltrialkoxysilan, wie er beispielsweise in WO 2008/131715 in den Beispielen 3 und 4 beschrieben ist.

Selbstverständlich können auch Mischungen der vorab beschriebenen Bindemittel eingesetzt werden. Bevorzugte Bindemittel sind Hydroxylgruppen-haltige Polyester und Polyacrylate, allein oder in Mischungen.

Der Anteil von B) in dem erfindungsgemäßen Beschichtungsmittel beträgt 10-80 Gew.-%, bezogen auf das Beschichtungsmittel, insbesondere 20 bis 80 Gew.-%.

Das Massenverhältnis der Komponente A) zu der Komponente B) beträgt in dem erfindungsgemäßen Beschichtungsmittel vorzugsweise 3:7 bis 7:3.

Zur Erzielung einer ausreichenden Aushärtungsgeschwindigkeit bei Aushärtungstemperaturen von weniger als 100 °C werden Katalysatoren C) eingesetzt. Geeignete Katalysatoren sind insbesondere Lewis-Säuren, Metall- oder Übergangsmetallchelate, -Salze oder -Partikel, beispielsweise auf Basis von Titan-, Aluminium-, Zinn- oder Zirkoniumkomplexen, Sulfonsäuren in freier aber auch neutralisierter oder adduktierter Form, wie sie beispielsweise in DE 2356768 beschrieben sind, Phosphorsäure oder phosphorige Säuren und deren Derivate (WO 2008/074491, Seite 18, Zeilen 1 - 17), hoch siedende Säuren, quarternäre Ammoniumcarboxylate oder auch Kombinationen der genannten Verbindungen.

Bevorzugt werden Übergangsmetallchelate oder -salze, hoch siedende Säuren, quarternäre Ammoniumcarboxylate oder Kombinationen der genannten Verbindungen eingesetzt.

Als Komponente C) wird ein Katalysator aus C1) mindestens einer organischen Carbonsäure mit einem Schmelzpunkt oberhalb von 60 °C und/oder C2) mindestens einem Tetraalkylammoniumcarboxylat eingesetzt.

Geeignete organische Carbonsäuren mit einem Schmelzpunkt oberhalb von 60 °C (bei Normaldruck) sind bei Raumtemperatur nicht flüchtige Verbindungen. Beispiele vorteilhaft einzusetzender Carbonsäuren sind Salicylsäure, Benzoesäure, Citronensäure, Isophthalsäure, Phthalsäure, Terephthalsäure und/oder Trimellithsäure. Bevorzugt werden im Rahmen der vorliegenden Erfindung Salicylsäure und Benzoesäure verwendet.

Als Katalysator C2) wird ein Tetraalkylammoniumcarboxylat eingesetzt. Beispiele hierfür sind Tetramethylammoniumformiat, Tetramethylammoniumacetat, Tetramethylammoniumpropionat, Tetramethylammoniumbutyrat, Tetramethylammonium-benzoat, Tetraethylammoniumformiat, Tetraethylammoniumacetat, Tetraethylammoniumpropionat, Tetraethylammoniumbutyrat, Tetraethylammoniumbenzoat, Tetrapropylammoniumformiat, Tetrapropylammoniumacetat, Tetrapropylammoniumpropionat, Tetrapropylammoniumbutyrat, Tetrapropylammoniumbenzoat, Tetrabutylammoniumformiat, Tetrabutylammoniumacetat, Tetrabutylammoniumpropionat, Tetrabutylammoniumbutyrat und/oder Tetrabutylammoniumbenzoat. Die genannten Tetraalkylammoniumcarboxylate können allein oder in Mischungen zugesetzt werden. Bevorzugt werden Tetraethylammoniumbenzoat und/oder Tetrabutylammoniumbenzoat eingesetzt.

Die Katalysatorkomponente C) in den erfindungsgemäßen Beschichtungsmitteln kann allein aus den oben genannten Alternativen C1) oder C2) bestehen, es können aber auch beliebige Mischungen der Katalysatoren C1) und C2) eingesetzt werden.
Derartige Mischungen aus C1) und C2) weisen insbesondere ein Verhältnis von 9 : 1 bis 1 : 9 (m/m) auf.

Das erfindungsgemäße Beschichtungsmittel kann zusätzlich in der Lacktechnologie bekannte Hilfsstoffe und/oder Zusatzstoffe D) wie Stabilisatoren, Lichtschutzmittel, Katalysatoren, Füllstoffe, Pigmente, Verlaufsmittel oder Rheologiehilfsmittel, wie z. B. sog. "sag control agents", Mikrogele oder pyrogenes Siliciumdioxid, in typischen Konzentrationen enthalten. Falls erforderlich, können in der Komponente D) der erfindungsgemäßen Beschichtungsmittel auch in der Lacktechnologie übliche anorganische oder organische Farb- und/oder Effektpigmente eingearbeitet werden.

Die Komponente D) ist im Falle von pigmentfreien Beschichtungsmitteln, d. h. Klarlacken, vorzugsweise in Mengen von 0,5 bis zu 8 Gew.-%, insbesondere 1 bis 6 %, bezogen auf das Beschichtungsmittel, in dem erfindungsgemäßen Beschichtungsmittel enthalten.
Im Falle von pigment- und/oder füllstoffhaltigen Beschichtungsmitteln kann der Gehalt von Komponente D) 5 bis 80 Gew.-%, insbesondere 10 bis 70 Gew.-% betragen, bezogen auf das Beschichtungsmittel.

Weiterhin kann das erfindungsgemäße Beschichtungsmittel organische Lösemittel als Komponente E) enthalten. Geeignete Lösemittel sind z. B. Ketone, Ester, Alkohole oder Aromaten.

Die Komponente E) ist vorzugsweise in Mengen von 20 bis zu 60 Gew.-%, insbesondere 20 % bis 50 %, bezogen auf das Beschichtungsmittel, in dem erfindungsgemäßen Beschichtungsmittel enthalten. Die Menge der Komponente E) orientiert sich an der einzustellenden Applikationsviskosität des Beschichtungsmittels.

Die Summe aller Anteile der Komponenten A) bis E) ergibt 100 Gew.-%. Bevorzugt bestehen die erfindungsgemäßen Beschichtungsmittel aus den genannten Komponenten A) bis E).

Die Herstellung der erfindungsgemäßen Beschichtungsmittel erfolgt durch Mischung der vorab beschriebenen Komponenten. Das Mischen kann in dem Fachmann bekannten Mischern erfolgen, beispielsweise Rührbehältern, Dissolvern, Perlmühlen, Walzenstühlen, etc., aber auch kontinuierlich mittels Statikmischern.

Gegenstand der vorliegenden Erfindung sind ebenfalls Metallbeschichtungszusammensetzungen, insbesondere für Automobilkarossen, Motor- und Fahrräder, Gebäudeteile und Haushaltsgeräte, welche die Addukte oder Beschichtungsmittel enthalten.

Beschichtungszusammensetzungen für Glas-, Kunststoff- oder Holzbeschichtungen, insbesondere Klarlacke, enthaltend die erfindungsgemäßen Beschichtungsmittel sind ebenfalls Gegenstand der vorliegenden Erfindung.
Die erfindungsgemäßen Beschichtungsmittel sind auch für die Mehrschichtlackierung, z. B. als Klarlack in der Automobil-Serienlackierung geeignet.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.
Nachfolgend wird die vorliegende Erfindung anhand von Beispielen näher erläutert. Alternative Ausführungsformen der vorliegenden Erfindung sind in analoger Weise erhältlich.

### Beispiele:

Sofern nicht anderes angegeben, beziehen sich die Mengenangaben in Prozent in den Beispielen auf das Gewicht.

### Beispiel 1: Herstellung der erfindungsgemäßen Addukte

27.4 g eines Isomerengemisches (ca. 50/50) aus 2,2,4- und 2,4,4-Trimethylhexandiol werden in einem 250 ml 3-Halskolben vorgelegt, unter Rühren mit 0.2 g Dibutylzinndilaurat (DBTDL) versetzt. Unter einem stetigen Stickstoffstrom wird das Gemisch im Wasserbad auf 60 °C erwärmt. Anschließend werden unter Rühren 72,4 g 3-Isocyanatopropyltrimethoxysilan so zugetropft, dass die Temperatur nicht über 70 °C ansteigt. Nach vollständiger Zugabe wird das Reaktionsgemisch 6 h bei 60 °C gerührt. Der freie NCO-Gehalt beträgt dann < 0,1 %. Das Produkt ist eine klare, mittelviskose Flüssigkeit.

Die Mengen der verwendeten Rohstoffe der weiteren Versuche sind in Tab. 1 angegeben. Dabei ist das Beispiel 2 nicht erfindungsgemäß. Das Vergleichsbeispiel zeigt bei Verwendung von 1,12-Dodecandiol eine ausgeprägte Kristallisationsneigung.

**Tabelle 1: Rezepturen der Beispiele und physikalisch-chemische Kenndaten der Produkte**

| | | **Beispiel 1 (erfindungsgemäß)** | **Beispiel 2 (nicht erfindungsgemäß)** | | **Beispiel 4 (erfindungsgemäß)** |
|---|---|---|---|---|---|
| | | **IPMS : TMH-Diol** | **IPMS : 1,12-Dodecandiol** | | **IPMS : NPG** |
| **NCO : OH - Verhältnis** | | **1,0 : 1,0** | 1,0 : 1,0 | | 1,0 : 1,0 |
| **Isocyanatopropyltrimethoxysilan** | | 72,4 g | 67,6 g | | 80,1 g |
| **TMH-Diol** | | 27,4 g | - | | - |
| **1,12-Dodecandiol** | | - | 32,4 g | | - |
| | | | | | |
| **NPG** | | - | - | | 19,7 g |
| **DBTDL** | | 0,2 g | 0,2 g | | 0,2 g |
| **Kenndaten** | | | | | |
| NCO-Gehalt DIN EN/ISO 11909 | % | < 0,1 | | | < 0,1 |
| Viskosität bei 23 °C DIN EN/ISO 3219 | mPas | 543 | | | 575 |
| Farbzahl DIN EN/ISO 6271 | Hazen | 54 | | | 12 |
| Trübung DIN EN/ISO 7027 | FNU | 1,11 | | | 0,90 |
| Bermerkung | | Bleibt nach 4- wöchiger Lagerung bei 5°C flüssig | Addukt ist kristalliner Feststoff | | Bleibt nach 4- wöchiger Lagerung bei 5°C flüssig |

| | | | | | |
|---|---|---|---|---|---|
| TMH-Diol= 2,2,4- und 2,4,4-Trimethylhexandiol, NPG= Neopentylglycol (2.2-Dimethylpropandiol-1.3), DBTL= Dibutylzinndilaurat | | | | | |

### Beispiel 2: Lackformulierungen gemäß der vorliegenden Erfindung

Lackformulierung
47,45 Gew.-% Setalux 1767 (Polyacrylatpolyol, Nuplex Resins B.V., Festkörpergehalt 65% in Solvent Naphtha)
30,8 Gew.-% IPMS-Addukt (gem. Beispiele in Tab 1)
0,3 Gew.-% TEAB (Tetraethylammoniumbenzoat, Katalysator, Aldrich)
10,4 Gew.-% Butylacetat
10,4 Gew.-% Xylol
0,05 Gew.-% TEGO^{®} Glide 410 (Polyetherpolysiloxan-Copolymer, Evonik Industries AG)
0,3 Gew.-% Tinuvin^{®} 292 (HALS-Stabilisator, BASF S.E.)
0,3 Gew.-% Tinuvin^{®} 900 (UV-Absorber, BASF S.E.)

Die Klarlacke werden durch Mischung der genannten Komponenten in einem geschlossenen Rührgefäß bei Raumtemperatur hergestellt.

Die formulierten Lacke besitzen Spritzviskosität (ca. 20 sec. DIN 4)). Sie werden im Spritzauftrag auf phosphatierte Stahlbleche (Gardobond 26S 60 OC, Hersteller: Chemetall, D) aufgetragen und entweder bei Raumtemperatur oder 30 min bei 60 °C im Umluftofen ausgehärtet. Die Trockenfilmschichtdicke beträgt 30 - 40 µm.
Die resultierenden Beschichtungen sind bei Verwendung der erfindungsgemäßen Produkte hochglänzend, frei von Oberflächenbelegungen und chemikalien- und kratzbeständig. Im Falle des nicht-erfindungsgemäßen Produktes aus Beispiel 2 wird nach RT-Härtung eine matte Oberfläche durch eine Belagsbildung erhalten. Die erhaltenen Ergebnisse sind in Tabelle 2 zusammengefasst.

**Tabelle 2: Eigenschaften der Beschichtungen**

| **Basis-Diol** | **Dodecandiol** | | **TMH-Diol** | | **NPG** | | | |
|---|---|---|---|---|---|---|---|---|
| **Härtung** | RT | 30 min, 60°C | RT | 30 min, 60°C | RT | 30 min, 60°C | | |
| **Tiefung (EN ISO 1520) [mm]** | Nicht prüfbar, da an der Oberfläche kristalliner Belag | 3,5 | 7,5 | 7,0 | 6,5 | 6,0 | | |
| **Pendelhärte (König) [s]** | | | | | | | | |
| **n 1 d** | | 31 | 10 | 13 | 8 | 11 | | |
| **n 2 d** | | 49 | 18 | 34 | 87 | 109 | | |
| **n 7 d** | | 87 | 66 | 97 | 106 | 127 | | |
| **Kugelschlag[In lbs] (DIN-EN-ISO 6272-1)** | - | 60 | > 80 | > 80 | 40 | 60 | | |
| **MEK-Test [ASTM D 4752] (Doppelhübe, 1 kg Auflagegewicht)** | - | > 150 | > 150 | > 150 | > 150 | > 150 | | |

## Patentansprüche

1. Beschichtungsmittel, enthaltend
A) Addukte gemäß der vorliegenden Erfindung aus der Umsetzung von Verbindungen der Formel (I)
OCN-(Alkyl)-Si(Alkoxy)₃ (I)
mit Verbindungen der Formel (II)
HO-(R)-OH (II)
worin Alkyl lineare oder verzweigte Alkylenketten mit 1-4 Kohlenstoffatomen, Alkoxy gleichzeitig oder unabhängig voneinander Methoxy-, Ethoxy-, Propoxy- oder Butoxy-Gruppen, und R ein verzweigter Alkylen- oder Cycloalkylenrest mit nicht mehr als 20 Kohlenstoffatomen bedeutet, wobei R Hydroxy-substituiert sein kann,
B) eine oder mehrere Bindemittelkomponenten,
C) 0,1 bis 4 Gew.-% bezogen auf alle Anteile der Komponenten A) bis E) mindestens eines Katalysators, wobei der Katalysator C1) mindestens eine organischen Carbonsäure mit einem Schmelzpunkt oberhalb von 60 °C und/oder C2) mindestens ein Tetraalkylammoniumcarboxylat ist,
D) optional Hilfs- und Zusatzstoffe,
E) optional organische Lösemittel.

2. Beschichtungsmittel gemäß Anspruch 1, **dadurch gekennzeichnet, dass** sie bei Temperaturen von 20 bis 100 °C härtbar sind.

3. Beschichtungsmittel gemäß Anspruch 1 oder 2, **dadurch gekennzeichnet, dass** als Komponente B) Hydroxylgruppen-haltige Polyester, Polyether, Polyacrylate, Polycarbonate und Polyurethane mit einer OH-Zahl von 20 bis 500 mg KOH/g bestimmt nach DIN 53240-2 und einer mittleren Molmasse von 250 bis 6000 g/Mol eingesetzt werden.

4. Beschichtungsmittel einem der vorhergehenden Ansprüche, **dadurch gekennzeichnet, dass** die Komponente C2) ausgewählt ist aus Tetramethylammoniumformiat, Tetramethylammoniumacetat, Tetramethylammoniumpropionat, Tetramethylammoniumbutyrat, Tetramethylammoniumbenzoat, Tetraethylammoniumformiat, Tetraethylammoniumacetat, Tetraethylammoniumpropionat, Tetraethylammoniumbutyrat, Tetraethylammoniumbenzoat, Tetrapropylammoniumformiat, Tetrapropylammoniumacetat, Tetrapropylammoniumpropionat, Tetrapropylammoniumbutyrat, Tetrapropylammoniumbenzoat, Tetrabutylammoniumformiat, Tetrabutylammoniumacetat, Tetrabutylammoniumpropionat, Tetrabutylammoniumbutyrat und/oder Tetrabutylammoniumbenzoat.

5. Metallbeschichtungszusammensetzungen und Beschichtungszusammensetzungen für Glas-, Kunststoff- oder Holzbeschichtungen enthaltend Beschichtungsmittel gemäß einem oder mehreren der Ansprüche 1 bis 4.

## Claims

1. Coating compositions comprising
A) adducts in accordance with the present invention from the reaction of compounds of the formula (I)
OCN-(Alkyl)-Si(Alkoxy)₃ (I)
with compounds of the formula (II)
HO-(R)-OH (II)
in which Alkyl denotes linear or branched alkylene chains having 1-4 carbon atoms, Alkoxy, simultaneously or independently at each occurrence, denotes methoxy, ethoxy, propoxy or butoxy groups, and R denotes a branched alkylene or cycloalkylene radical having not more than 20 carbon atoms, and R can be hydroxy-substituted,
B) one or more binder components,
C) 0.1 to 4% by weight, based on all fractions of components A) to E), of at least one catalyst, wherein the catalyst C1) is at least one organic carboxylic acid having a melting point of more than 60°C and/or C2) at least one tetraalkylammonium carboxylate,
D) optionally auxiliaries and additives,
E) optionally organic solvents.

2. Coating compositions according to Claim 1, **characterized in that** they are curable at temperatures of 20 to 100°C.

3. Coating compositions according to Claim 1 or 2, **characterized in that** use is made as component B) of hydroxyl-containing polyesters, polyethers, polyacrylates, polycarbonates and polyurethanes having an OH number of 20 to 500 mg KOH/g determined according to DIN 53240-2 and an average molar mass of 250 to 6000 g/mol.

4. Coating compositions one of the preceding claims, **characterized in that** component C2) is selected from tetramethylammonium formate, tetramethylammonium acetate, tetramethylammonium propionate, tetramethylammonium butyrate, tetramethylammonium benzoate, tetraethylammonium formate, tetraethylammonium acetate, tetraethylammonium propionate, tetraethylammonium butyrate, tetraethylammonium benzoate, tetrapropylammonium formate, tetrapropylammonium acetate, tetrapropylammonium propionate, tetrapropylammonium butyrate, tetrapropylammonium benzoate, tetrabutylammonium formate, tetrabutylammonium acetate, tetrabutylammonium propionate, tetrabutylammonium butyrate and/or tetrabutylammonium benzoate.

5. Metal-coating compositions and coating compositions for glass coatings, plastics coatings or wood coatings, comprising coating materials according to one of more of Claims 1 to 4.

## Revendications

1. Agent de revêtement, contenant
A) des additifs selon la présente invention provenant de la réaction de composés de la formule (I)
OCN-(alkyle)-Si(alcoxy)₃ (I)
avec des composés de la formule (II)
HO-(R)-OH (II)
dans lequel alkyle représente des chaînes alkylène linéaires ou ramifiées avec 1 à 4 atomes de carbone, alcoxy représente simultanément ou indépendamment l'un de l'autre des groupes méthoxy, éthoxy, propoxy ou butoxy, et R représente un radical alkylène ou cycloalkylène ramifié avec pas plus de 20 atomes de carbone, dans lequel R peut être hydroxy-substitué,
B) un ou plusieurs composants de liant,
C) 0,1 à 4 % en poids rapporté à toutes les parties des composants A) à E) d'au moins un catalyseur, dans lequel le catalyseur C1) est au moins un acide carboxylique organique avec un point de fusion supérieur à 60°C et/ou C2) est au moins un carboxylate de tétraalkylammonium,
D) optionnellement des substances d'appoint et d'addition,
E) optionnellement des solvants organiques.

2. Agent de revêtement selon la revendication 1, **caractérisé en ce qu'**il est durcissable à des températures de 20 à 100°C.

3. Agent de revêtement selon la revendication 1 ou 2, **caractérisé en ce que** l'on utilise comme composant B) des polyesters, polyéthers, polyacrylates, polycarbonates et polyuréthanes contenant des groupes hydroxyle avec un indice d'hydroxyle de 20 à 500 mg KOH/g déterminé selon la norme DIN 53240-2 et une masse molaire moyenne de 250 à 6000 g/mole.

4. Agent de revêtement l'une quelconque des revendications précédentes, **caractérisé en ce que** le composant C2) est sélectionné parmi le formiate de tétraméthylammonium, l'acétate de tétraméthylammonium, le propionate de tétraméthylammonium, le butyrate de tétraméthylammonium, le benzoate de tétraméthylammonium, le formiate de tétraéthylammonium, l'acétate de tétraéthylammonium, le propionate de tétraéthylammonium, le butyrate de tétraéthylammonium, le benzoate de tétraéthylammonium, le formiate de tétrapropylammonium, l'acétate de tétrapropylammonium, le propionate de tétrapropylammonium, le butyrate de tétrapropylammonium, le benzoate de tétrapropylammonium, le formiate de tétrabutylammonium, l'acétate de tétrabutylammonium, le propionate de tétrabutylammonium, le butyrate de tétrabutylammonium et/ou le benzoate de tétrabutylammonium.

5. Compositions pour le revêtement de métaux et compositions de revêtement pour le verre, des recouvrements de matières plastiques ou de bois, contenant des agents de revêtement selon une ou plusieurs des revendications 1 à 4.
